# EUROPEAN PATENT SPECIFICATION

(11) **EP 3 844 954 B1**
(45) Date of publication and mention of the grant of the patent: **18.11.2026**
(21) Application number: 19854908.1
(22) Date of filing: 30.08.2019
(51) Int. Cl.: H04N 19/105, H04N 19/533, H04N 19/513, H04N 19/176

(54) **SELECTIVE TEMPLATE MATCHING IN VIDEO CODING**
SELEKTIVE SCHABLONENANPASSUNG IN DER VIDEOCODIERUNG
MISE EN CORRESPONDANCE SÉLECTIVE DE GABARITS EN CODAGE VIDÉO

(30) Priority: 31.08.2018 US 201862726125 P; 29.08.2019 US 201916556015
(43) Date of publication of application: 07.07.2021
(73) Proprietor: Hulu, LLC, Santa Monica, CA 90404 (US)
(72) Inventor: ZHANG, Wenhao, Santa Monica, CA 90404 (US); FU, Deliang, Santa Monica, CA 90404 (US); LIU, Chen, Santa Monica, CA 90404 (US); LIU, Xiaobo, Santa Monica, CA 90404 (US)
(74) Representative: Müller-Boré & Partner Patentanwälte PartG mbB
(86) International application number: PCT/US2019/049235
(87) International publication number: WO 2020/047517

(56) References cited:
- EP-A1- 3 809 701
- WO-A1-2017/142326
- US-A1- 2017 180 727
- US-A1- 2017 353 719
- US-B1- 9 544 596
- US-B2- 9 025 893
- US-B2- 9 432 692
- Y-W CHEN ET AL: "Description of SDR, HDR and 360° video coding technology proposal by Qualcomm and Technicolor - low and high complexity versions", no. JVET-J0021, 14 April 2018 (2018-04-14), XP030248214, Retrieved from the Internet <URL:http://phenix.int-evry.fr/jvet/doc_end_user/documents/10_San%20Diego/wg11/JVET-J0021-v5.zip JVET-J0021.docx> [retrieved on 20180414]

## Description

### BACKGROUND

In a video coding framework, video content is compressed via a set of processes: prediction, transformation, quantization, and entropy coding. Inter prediction is a type of prediction in which the temporal redundancy between adjacent video frames is reduced. Inter prediction first determines a template from neighboring blocks to a current block that is currently being coded (e.g., encoded or decoded). Then, a video transcoder or decoder uses the template to find the best matching area inside a search region of a reference frame. In the search, the video transcoder or decoder determines a motion vector to a reference block associated with the matching template area. In some cases, the neighboring template region may not be similar to the content in the current block. In this case, when a matching template area is found, the reference block may not be the best match to the current block being coded. Then, the matching template search process may generate sub-optimal results when the neighboring template region has less similarity to the coding block.

US 2017/353719 A1 describes a method and apparatus for video coding using template-based Intra prediction. The template-based Intra prediction searches N template matching candidates to reduce the complexity. The template-based Intra prediction assigns different weights for different pixel locations of template or uses different pixel precision for interpolation filter during cost evaluation among template matching candidates. Truncated template size is used to reduce the complexity. The left and top templates may have different sizes for non-square block. Inverse templated-based Intra prediction is used.

Y-W Chen et al, "Description of SDR, HDR and 360° video coding technology proposal by Qualcomm and Technicolor - low and high complexity versions", Joint Video Exploratino Team (JVET), 10th Meeting, San Diego, US, 10 - 20 April 2018, JVET-J0021, describes an inter prediction mode inter mode, where Template Matching ^{™} is used to derive the motion vector predictor for the inter mode. First, the two HEVC AMVP candidates are checked and the candidate which leads to the smaller cost is selected as the starting point. Then a local search based on template matching around the starting point is performed and the MV which results in the minimum matching cost is selected as the MVP for the current block without signalling MVP index to the encoder. TM is utilized ot derive motion information of the current block by finding best match between a current template in a reference picture. The weighted TM is used by applying different weights to each sample based on its row and column indices in template block when calculating the distortion between the current and reference templates.

### SUMMARY

The invention is defined by the independent claims, while preferred embodiments form the subject of the dependent claims

### BRIEF DESCRIPTION OF THE DRAWINGS

FIG. 1 depicts a simplified system for performing motion prediction according to some embodiments.
FIG. 2 depicts a template matching search process for inter prediction according to some embodiments.
FIG. 3 depicts cases of finding matching templates in which neighboring blocks are not similar.
FIG. 4 depicts a simplified flowchart of a method for performing the matching template search process for a first option #1 according to some embodiments.
FIGs. 5A and 5B depict examples of a current block C to illustrate the matching template search process according to some embodiments.
FIG. 6 depicts a simplified flowchart of a matching template search process at a decoder according to some embodiments.
FIG. 7 depicts an example of a current frame and a reference frame in the matching template search process at the decoder according to some embodiments.
FIG. 8 depicts a simplified flowchart of a method for performing the matching template search process for a second option #2 according to some embodiments.
FIG. 9 depicts the frames used in the matching template search process for the second option #2 according to some embodiments.
FIG. 10 depicts an example of a transcoding system according to some embodiments.
FIG. 11 depicts an example of a decoding system according to some embodiments.

### DETAILED DESCRIPTION

Described herein are techniques for a video coding system. In the following description, for purposes of explanation, numerous examples and specific details are set forth in order to provide a thorough understanding of some embodiments. Some embodiments as defined by the claims may include some or all of the features in these examples alone or in combination with other features described below, and may further include modifications and equivalents of the features and concepts described herein.

During motion prediction, a transcoder or decoder may determine a rough reference block for a current block. The transcoder or decoder uses the rough reference block to perform motion prediction to find a final reference block. To determine the final reference block, the transcoder or decoder may use template regions, which are neighboring areas to the current block and the rough reference block. Sometimes, the template regions may not optimal, such as the template regions may not be similar in content to the current block or the rough reference block, such as when the rough reference block or current block are within an object and the template regions are not within the object. The use of template regions that are not optimal may result in less efficient compression of the encoded bitstream. Some embodiments can detect the reliability of template regions and lessen the effect of regions that are less similar to the current coding block being coded during a motion prediction search. The motion prediction search accuracy of template matching is improved, and the resulting compression performance of the video codec is increased.

### System

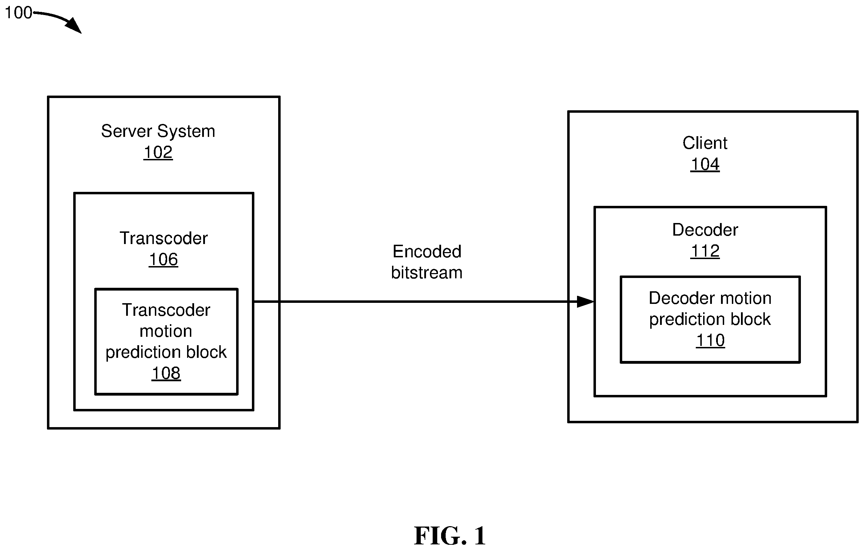

FIG. 1 depicts a simplified system 100 for performing motion prediction according to some embodiments. System 100 transcodes a source video asset, which may be any type of video, such as for a television show, movie, or video clip. The source video may need to be transcoded into one or more formats, such as formats having one or more bitrates. In some embodiments, a server system 102 sends an encoded bitstream to client 104. For example, server system 102 may be sending a video to a client 104 for playback.

Server system 102 includes a transcoder 106 that transcodes a video into an encoded bitstream. Transcoder 106 may be a software video processor/transcoder configured on a central processing unit (CPU), a hardware accelerated video processor/transcoder with a graphical processing unit (GPU), a field programmable gate array (FPGA), and/or a hardware processor/transcoder implemented in an application-specific integrated circuit (ASIC). Transcoding may be the conversion from one digital format to another digital format. Transcoding may involve decoding the source format and encoding the source video into another digital format, or converting the source content into videos with a specific resolution, framerate, bitrate, codec, etc. Also, encoding may be the conversion of analog source content and to a digital format. As used, the term transcoding may include encoding.

During the transcoding process, a transcoder motion prediction block 108 performs motion prediction for a current block of a current frame. During motion prediction, transcoder motion prediction block 108 may perform a template search process, which will be described in more detail below.

Transcoder 106 transmits the resulting encoded bitstream to decoder 112 over a network or other types of medium. Decoder 112 receives the encoded bitstream and a decoder motion prediction block 110 performs motion prediction during the decoding process. During motion prediction, decoder motion prediction block 110 may perform a template search process, which will be described in more detail below.

The template search process in transcoder motion prediction block 108 and/or decoder motion prediction block 110 may be optimized by adjusting the weights that are applied to template regions. Transcoder motion prediction block 108 and/or decoder motion prediction block 110 use weighted template regions to determine a final reference block to the current block.

In some embodiments, the template search by transcoder motion prediction block 108 and decoder motion prediction block 110 uses fewer bits in the encoded bitstream. A rough motion vector may be signaled in the encoded bitstream and then both transcoder motion prediction block 108 and decoder motion prediction block 110 determine a final motion vector to a final reference block. Transcoder motion prediction block 108 determines the residual between the current block and the final reference block and signals the residual in the encoded bitstream. Once receiving the rough motion vector, decoder motion prediction block 110 searches for the final motion vectors and arrives at the same final motion vector as transcoder motion prediction block 108. Decoder motion prediction block 110 can then apply the residual to the final reference block to decode the current block.

A motion vector may be a two-dimensional position offset between a current block and a reference block. A decimal precision motion vector may be used, such as (10.25, 4.5). A motion search searches for these finer granularity positions and finds the best reference block, which is the block most similar to the current block. Signaling these motion vectors requires a number of bits to represent both horizontal and vertical components in both integer and decimal digits.

In a template matched based motion refine scheme, a rough motion vector is a low precision motion vector, for example, it could be an integer-only motion vector, or more aggressively, a multiple of values, such as 2, 4, etc. Signaling this rough motion vector such as by signaling (10, 4) spends fewer bits. Then transcoder motion prediction block 108 and decoder motion prediction block 110 can start from the rough motion vector to derive the final motion vector by themselves without any further signaling on the final motion vector.

In some embodiments, the rough motion vector could be a copy of a motion vector from the existing neighboring blocks, or a global motion vector. The rough motion vector could be signaled by an index flag or an index in the encoded bitstream, which is done with fewer bits compared with signaling motion vectors. Decoder motion prediction block 110 can also be applied on these rough motion vectors to generate the final motion vectors for the current coding block.

### Matching template search process

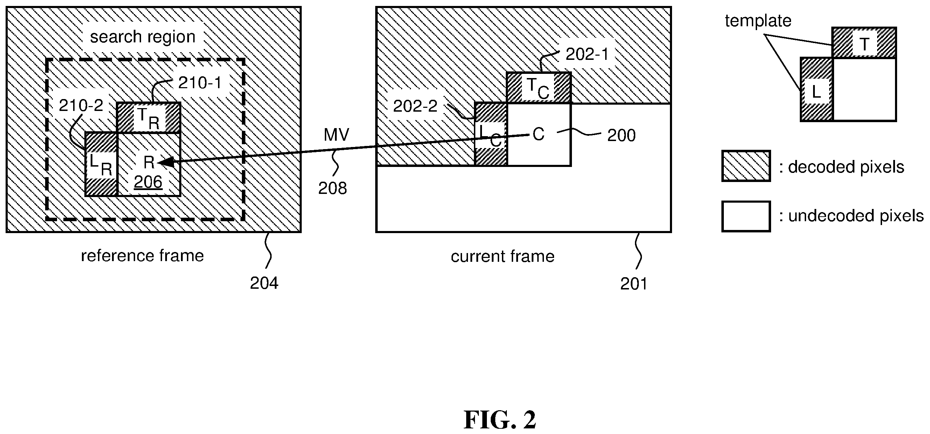

FIG. 2 depicts a template matching search process for inter prediction according to some embodiments. The template matching search process may be performed by a codec (e.g., a module in transcoder 106 and/or decoder 112) that is transcoding a video into an encoded bitstream or decoding the encoded bitstream. The process may be referred to as decoder side motion derivation; however, although the process is referred to as decoder side motion derivation, transcoder motion prediction block 108 of transcoder 106 and decoder motion prediction block 110 of decoder 112 may both perform the described motion template search process.

The following will describe a matching template search process in general for background. Given a current coding block C 200 that is being transcoded in a current frame 201, transcoder motion prediction block 108 determines a template from neighboring decoded pixels. The template may include neighboring pixels to current block 200, such as the top neighboring pixels 202-1 and the left neighboring decoded pixels 202-2 from the current coding block. The top neighboring pixels include pixels that are on top of the current block and the left neighboring decoded pixels include pixels that are to the left of the current block. Although these positions are described, other positions may be appreciated. Also, although two template regions are described, more than two template regions may be used. The pixels in top neighboring pixels 202-1 and the left neighboring decoded pixels 202-2 have been transcoded and then decoded.

Transcoder motion prediction block 108 uses top neighboring pixels 202-1 and the left neighboring decoded pixels 202-2 to find a template inside a search region of a reference frame 204 that is similar to top neighboring pixels 202-1 and the left neighboring decoded pixels 202-2. The template area includes pixels that neighbor a rough reference block R 206, such as top neighboring pixels 210-1 and the left neighboring decoded pixels 210-2. Then, transcoder motion prediction block 108 determines the rough motion vector (MV) 208 of current block C that points to a rough reference block R 206 based on the template matching results. The search region may be based on a rough motion vector. Transcoder motion prediction block 108 can send information identifying rough motion vector 208 in the encoded bitstream to decoder 112.

Decoder 112 receives the encoded bitstream and then decodes the bitstream. During the decoding process, decoder motion prediction block 110 determines the rough motion vector and identifies the template for a rough reference block R 206. However, decoder motion prediction block 110 may also search for a block that provides a better match to current block C 200 compared to rough reference block R 206. In this case, decoder motion prediction block 110 performs a search to find a final motion vector to a final reference block inside a search region of reference frame 204, which will be described in more detail below. If decoder 112 determines a final reference block R 206, decoder 112 decodes the current block using the final reference block R and a residual from the encoded bitstream. For example, decoder 112 may combine the residual with final reference block R to generate the pixels for the current block C. Accordingly, both transcoder motion prediction block 108 and decoder motion prediction block 110 perform the same search for the final motion vector after determining the rough motion vector to arrive at the same final reference block.

To determine a final reference block that is considered to have a better similarity (e.g., an optimal similarity in the search region) to current block C 200, transcoder motion prediction block 108 or decoder motion prediction block 110 may calculate a similarity of a reference block to current block C 200. For example, transcoder motion prediction block 108 or decoder motion prediction block 110 may use a function, such a cost function, to calculate the similarity during the motion search for the final reference block. In some embodiments, the cost function may be:
R = argmin Cost(C, R), where Cost(C, R) = Dist(T_{C}, T_{R}) + Dist(L_{C}, L_{R}),
where Dist(X, Y) is a measurement of similarity between two given blocks, e.g., block X and block Y, T_{C} is a top template 202-1 for the current block C, T_{R} is a top template T_{R} 210-1 for a rough reference block R, L_{C} is a left template 202-2 for the current block C, and L_{R} is a left template L_{R} 210-2 for a rough reference block R. The distance may be between corresponding pixel values in the template for current block C 200 and the template for a prospective final reference block. In some embodiments, the similarity is a distance, which may be measured by a Sum of Absolute Distortion (SAD), a Sum of Square Distortion (SSD), etc.

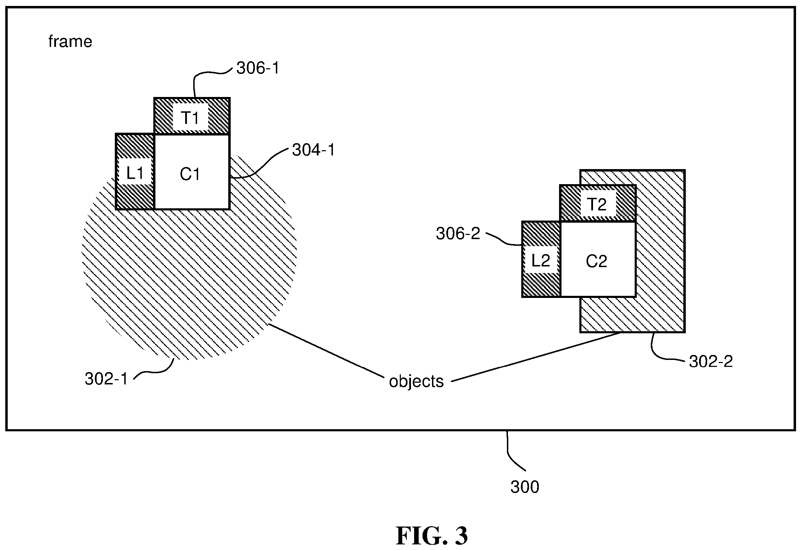

In a conventional design of the matching template search process on the decoder side, the left template and top template equally contribute to similarity in the cost function. However, it is possible that the left or top neighbors are not similar to the current block. FIG. 3 depicts cases of finding matching templates in which neighboring blocks are not similar. A frame 300 includes a first object 302-1 and a second object 302-2, which may be objects in the video.

A current block C1 304-1 is in first object 302-1. That is, current block C1 304-1 includes content for first object 302-1. For current block C1 304-1, template T1 306-1 is not in first object 302-1 which includes current block C1 304-1, and thus using template T1 306-1 may introduce inaccuracies in cost. That is, template T1 306-1 may include content that may be largely different from current block C1 304-1 because it is expected that the content in object 302-1 may be more similar than content outside of first object 302-1.

A current block C2 304-2 is in second object 302-2. That is, current block C2 304-2 includes content for second object 302-2. Similarly, for current block C2 304-2, template L2 306-2 is not in second object 302-2, which includes current block C2 304-2. Thus, using template L2 306-2 may also introduce inaccuracies in cost.

The above inaccuracies occur because when a matching template to template T1 or L2 is found, the associated final reference block may not be similar to the current block C1 or C2, respectively. Under these cases, the template matching motion prediction results may not be accurate, which may result in compression performance loss. However, if the template T1 or the template L2 was in the same object as the current block, then it is more likely that the final reference block is more similar to the current block because the matching template search process is looking for a template for a final reference block that includes similar content to the current block.

Accordingly, instead of using a fixed cost function, some embodiments may adjust the contribution of selected template regions. For example, transcoder motion prediction block 108 or decoder motion prediction block 110 may selectively prioritize template regions for a block based on a similarity measurement. In some embodiments, transcoder motion prediction block 108 or decoder motion prediction block 110 may assign different weighting factors to the template regions, such as the left template and the top template, when calculating the similarity using the cost function. For example, transcoder motion prediction block 108 or decoder motion prediction block 110 may use the following cost function:
R = argmin Cost(C, R), where Cost(C, R) = W_{T} · Dist(T_{C}, T_{R}) + W_{L} · Dist(L_{C}, L_{R}),
where a weighting factor W_{T} and a weighting factor W_{L} reflect a weighting to adjust a contribution of the top template and the left template, respectively, to the cost. The term argmin calculates the smallest cost for the cost function of Cost(C, R), where C is the current block C, and R is the rough reference block R. The argmin function, given the current block C, searches for a reference block R that can generate a minimum cost. The cost of a current block C and a rough reference block R is based on a first weighting factor W_{T} of the distance between a top template T_{C} of the current block and a top template T_{R} of the rough reference block. Also, the cost of current block C 200 and a rough reference block R is based on a second weighting factor W_{L} of the distance between a left template L_{C} of current block C 200 and a left template L_{R} of the rough reference block. If one of the left or top template has a stronger similarity with current block C 200, some embodiments may generate the corresponding weighting factor to be larger.

Transcoder motion prediction block 108 or decoder motion prediction block 110 may use different methods to determine the weighting factors. In a first option #1, transcoder motion prediction block 108 derives the weighting factors, and sends the weighting factors to decoder motion prediction block 110. Then, decoder motion prediction block 110 uses the weighting factors in the matching template search process. In a second option #2, decoder motion prediction block 110 derives the weighting factors itself.

### First Option #1 of Determining the Weighting Factors

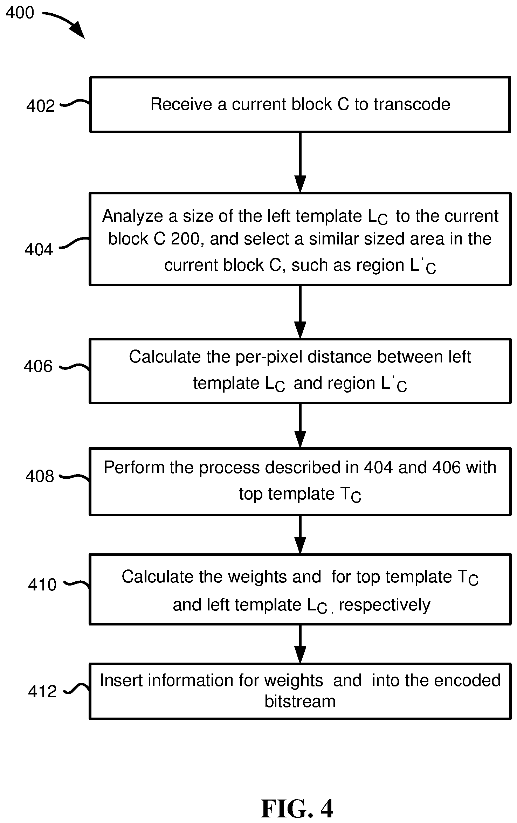

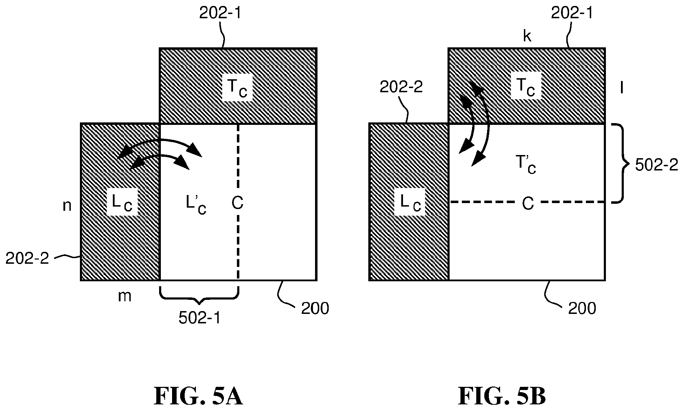

FIG. 4 depicts a simplified flowchart 400 of a method for performing the matching template search process for first option #1 according to some embodiments. Also, the method will be described with respect to FIGs. 5A and 5B, which depict examples of a current block C 200 to illustrate the matching template search process according to some embodiments. At 402, at the transcoder side, transcoder motion prediction block 108 receives a current block C 200 to transcode. At 404 and in FIG. 5A, transcoder motion prediction block 108 analyzes a size of the left template L_{C} 202-2 to the current block C 200, and selects a similar sized area in the current block C, such as region L'_{C} 502. For example, transcoder motion prediction block 108 determines the size of left template L_{C} 202-2 by measuring a height n and a width m. Then, transcoder motion prediction block 108 determines a similar size block in current block C 200. Although a neighboring region to left template L_{C} 202-2 is selected, other regions could be used in different areas of current block C 200.

Then, at 406, transcoder motion prediction block 108 calculates the per-pixel distance between left template L_{C} 202-2 and region L'_{C} 502-1. In some embodiments, transcoder motion prediction block 108 may use the following to determine the distance, but other calculations may be appreciated: $Dist \left({L}_{c},L{′}_{C}\right) = \frac{\sum \left‖{L}_{c}\left(i, j\right)-L{′}_{c}\left(i,m-j\right)\right‖}{m \times n} ,$ where (i, j) are pixel coordinates in left template L_{C} 202-2, and (i, m-j) are corresponding pixel coordinates in region L_{C} 502-1. The calculation takes the difference of pixel values between the left template L_{C} 202-2 and region L'_{C} 502-1 and divides the sum by the area of left template L_{C} 202-2. This compares the difference between pixels in the same position in left template L_{C} 202-2 and region L'_{C} 502-1. Other methods to calculate a difference between pixel values between region L'_{C} 502-1 and region L'_{C} 502-1 may be appreciated, such as comparing an average of total pixel values between left template LC 202-2 and region L'_{C} 502-1.

At 408 and in FIG. 5B, transcoder motion prediction block 108 then performs the same process with top template T_{C} 202-1. For example, transcoder motion prediction block 108 finds a similar sized area in the current block C 200, such as region T'_{C} 502-2. Then, transcoder motion prediction block 108 calculates the per-pixel distance between top template T_{C} 202-1 and region T'_{C} 502-2. Transcoder motion prediction block 108 may use the following to determine the distance, but other calculations may be appreciated: $Dist \left({T}_{c},T{′}_{C}\right) = \frac{\sum \left‖{T}_{c}\left(i, j\right)-T{′}_{c}\left(l-i,j\right)\right‖}{k \times l} ,$ where (i, j) are pixel coordinates in top template T_{C} 202-1, and (l-i, j) are corresponding pixel coordinates in region T'_{C} 502-2. The calculation takes the difference of pixel values between the top template T_{C} 202-1 and region T'_{C} 502-2 and divides the sum by the area of top template T_{C} 202-1. Transcoder motion prediction block 108 compares the difference between pixels in the same position in top template T_{C} 202-1 and region T'_{C} 502-2.

After determining region L'_{C} 502-1 and region T'_{C} 502-2, at 410, transcoder motion prediction block 108 calculates the weights W_{T} and W_{L} for top template T_{C} 202-1 and left template L_{C} 202-2, respectively. For example, transcoder motion prediction block 108 may use the following, but other calculations may be appreciated: ${W}_{L} = \frac{Dist \left({L}_{c},L{′}_{C}\right)}{Dist \left({T}_{c},T{′}_{C}\right) + Dist \left({L}_{c},L{′}_{C}\right)} , and$ and ${W}_{T} = \frac{Dist \left({T}_{c},T{′}_{C}\right)}{Dist \left({T}_{c},T{′}_{C}\right) + Dist \left({L}_{c},L{′}_{C}\right)} .$

The above calculations determine the weighted distribution of the difference in distances between the templates and the similar sized regions. For example, the distance Dist(L_{c}, L'_{C}) is the difference between left template L_{C} 202-2 and region L'_{C} 502-1, and the distance Dist(T_{c}, T'_{C}) is the difference between top template T_{C} 202-1 and region T'_{C} 502-2. The weighted distribution calculates the contribution of each respective distance compared the total distance of distance Dist(L_{c}, L'_{C}) and distance Dist(T_{c}, T'_{C}).

At 412, transcoder motion prediction block 108 inserts information for weights W_{T} and W_{L} into the encoded bitstream. For example, transcoder motion prediction block 108 may convert the values of the weights W_{T} and W_{L} to integer values and insert the integers into the encoded bitstream. Transcoder motion prediction block 108 may use integers because integers are sent in the encoded bitstream instead of fractional numbers, but fractional numbers may also be used.

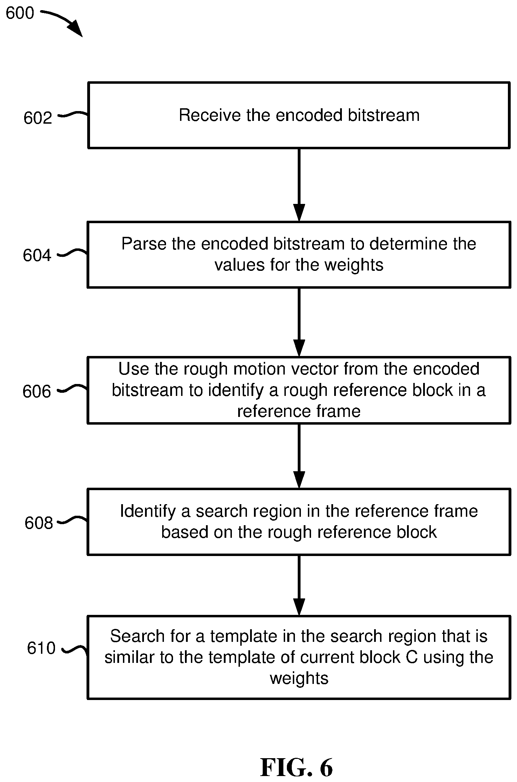

The process then continues at decoder 112. FIG. 6 depicts a simplified flowchart 600 of a matching template search process at decoder 112 according to some embodiments. At 602, decoder motion prediction block 110 receives the encoded bitstream. At 604, when decoding a current block C 200, transcoder motion prediction block 108 parses the encoded bitstream to determine the values for the weights W_{T} and W_{L}.

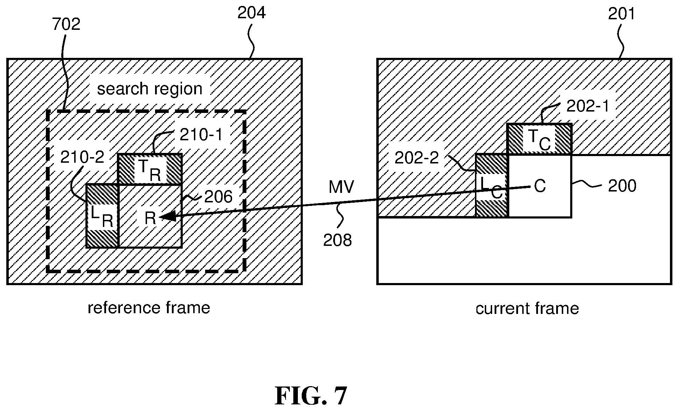

Decoder motion prediction block 110 then can use the weights in the matching template search process. FIG. 7 depicts an example of current frame 201 and reference frame 204 in the matching template search process at decoder 112 according to some embodiments. For example, at 606, decoder motion prediction block 110 uses the rough motion vector from the encoded bitstream to identify a rough reference block 206 in a reference frame 204. Although rough reference block 206 is identified, decoder motion prediction block 110 may look for a final reference block that may be a better match than the identified rough reference block 206 that was identified by rough motion vector 208.

To find a better match, at 608, decoder motion prediction block 110 identifies a search region 702 in reference frame 204 based on rough reference block 206. For example, decoder motion prediction block 110 determines a position of rough reference block 206 and then generates a boundary for search region 702 based on the position of rough reference block 206. The boundary may be a number of surrounding blocks to rough reference block 206, coordinates of a surrounding area to rough reference block 206, or other areas in reference frame 204.

After determining search region 702, at 610, decoder motion prediction block 110 searches for a template in search region 702 that is similar to the template of current block C 200 using the weights. For example, decoder motion prediction block 110 applies the respective weights to the left template and the top template for different reference blocks in search region 702 to select a final reference block that is most similar to current block C 200. Decoder motion prediction block 110 may find a different reference block using the weights compared to a process that does not use weights (e.g., an equal weighting is used). Because the template that is selected using the weights may be more similar to the content of current block C 200, then the final reference block selected using the weights may be more similar to the current block than a final reference block that is determined without using the weights.

In some examples, decoder motion prediction block 110 may select a final motion vector to a final reference block in search region 702. Then, decoder motion prediction block 110 applies the respective weights to pixel values of left template L_{R} 210-2 and top template T_{R} 210-1 of a prospective final reference block. Additionally, decoder motion prediction block 110 applies the respective weights to pixel values of left template L_{C} 202-2 and top template T_{C} 202-1 of current block C 200. Then, decoder motion prediction block 110 compares the weighted pixel values for the left templates and the weighted pixel values for the top templates to determine the similarity between the prospective final reference block and current block C 200. For example, a smaller distance between the weighted pixel values means more similarity. Decoder motion prediction block 110 may perform the above search for multiple prospective reference blocks in search region 702 and select a final reference block that includes a left template and a top template that is most similar to the left template and top template of current block C 200.

### Second Option #2 of Determining the Weighting Factors

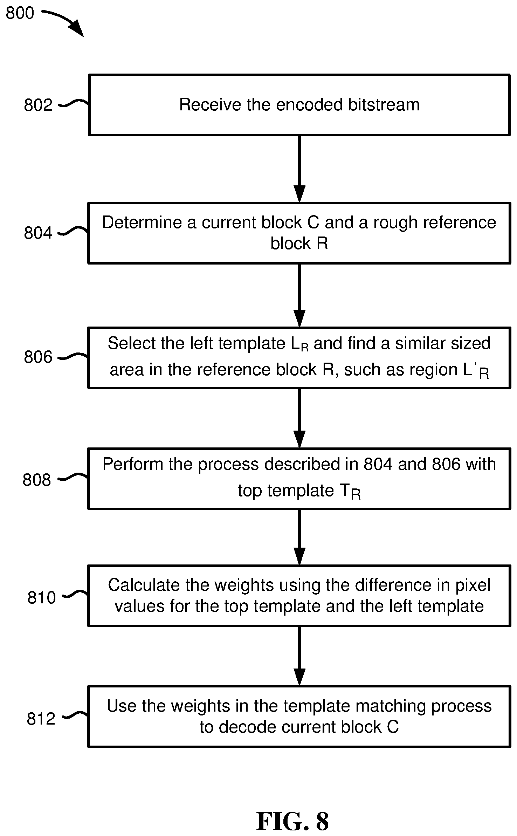

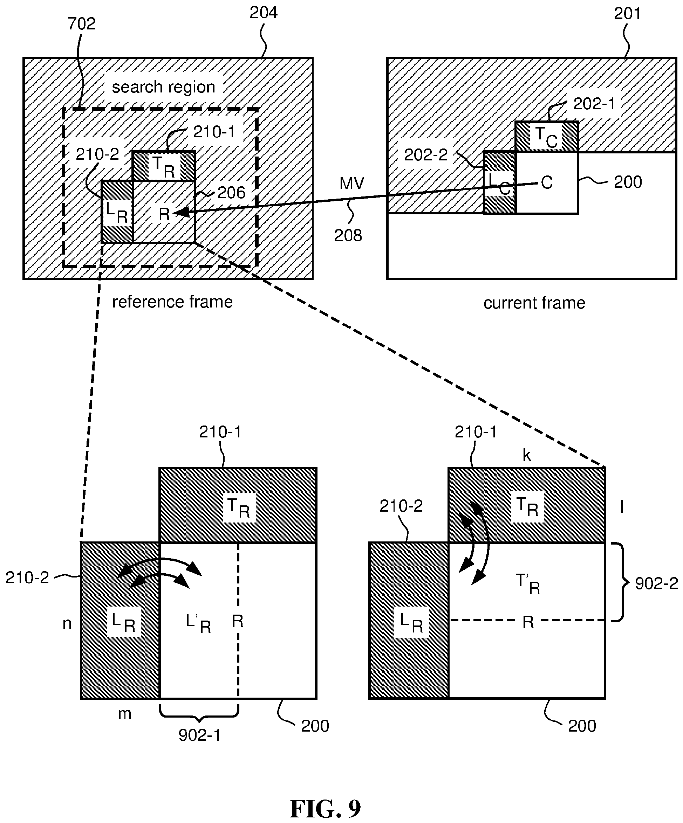

The following will describe the matching template search process for the second option #2. FIG. 8 depicts a simplified flowchart 800 of a method for performing the matching template search process for second option #2 according to some embodiments. Also, FIG. 9 depicts the frames used in the matching template search process for second option #2 according to some embodiments. In this example, decoder motion prediction block 110 calculates the weights instead of transcoder motion prediction block 108.

At 802, decoder 112 receives the encoded bitstream. The encoded bitstream does not include the weights in some embodiments. In other embodiments, the encoded bitstream may include the weights, but decoder motion prediction block 110 may recalculate the weights.

During the decoding process, at 804, decoder motion prediction block 110 determines a current block C 200 and a rough reference block R 206. At 806, decoder motion prediction block 110 selects the left template L_{R} and finds a similar sized area in rough reference block R 206, such as region L'_{R} 902-1. Then, decoder motion prediction block 110 calculates the per-pixel distance of left template L_{R} 210-2 and region L'_{R} 902-1. For example, decoder motion prediction block 110 may use the following to determine the distance but other calculations may be appreciated: $Dist \left({L}_{R},L{′}_{R}\right) = \frac{\sum \left‖{L}_{R}\left(i, j\right)-L{′}_{R}\left(i,m-j\right)\right‖}{m \times n} ,$ where (i, j) are pixel coordinates in left template L_{R} 210-2, and (i, m-j) are corresponding pixel coordinates in region L'_{R} 902-1. Decoder motion prediction block 110 calculates the difference of pixel values between left template L_{R} 210-2 and region L'_{R} 902-1 and divides the sum by the area of left template L_{R} 210-2. Decoder motion prediction block 110 compares the difference between pixels in the same position in left template L_{R} 210-2 and region L'_{R} 902-1.

At 808, decoder motion prediction block 110 then performs the same process with top template T_{R} 210-1. For example, decoder motion prediction block 110 selects a similar sized area in the current block R 200 as top template T_{R} 210-1, such as region T'_{R} 902-2. Then, decoder motion prediction block 110 calculates the per-pixel distance of template T_{R} and region T'_{R}. Decoder motion prediction block 110 may use the following to determine the distance, but other calculations may be appreciated: $Dist \left({T}_{R},T{′}_{R}\right) = \frac{\sum \left‖{T}_{R}\left(i, j\right)-T{′}_{R}\left(l-i,j\right)\right‖}{k \times l} ,$ where (i, j) are pixel coordinates in top template T_{R} 210-1, and (l-i, j) are corresponding pixel coordinates in region T'_{R} 902-2. Decoder motion prediction block 110 calculates the difference of pixel values between top template T_{R} 210-1 and region T'_{R} 902-2 and divides the sum by the area of top template T_{R} 210-1. Decoder motion prediction block 110 compares the difference between pixels in the same position in top template T_{R} 210-1 and region T'_{R} 902-2.

At 810, decoder motion prediction block 110 then calculates the respective weights W_{T} and W_{L} using the difference in pixel values for top template T_{R} 210-1 and region T'_{R} 902-2 and left template L_{R} 210-2 and region L'_{R} 902-1. In the first option #1 above, transcoder motion prediction block 108 uses regions within current block C 200 because the current block is not encoded yet in the encoding process. However, in the decoding process, current block C 200 has not been decoded yet and regions within current block C 200 cannot be used to determine the weights. However, decoder motion prediction block 110 uses regions in the reference blocks, which have already been decoded.

In the calculation, decoder motion prediction block 110 may use the following, but other calculations may be appreciated: ${W}_{L} = \frac{Dist \left({L}_{R},L{′}_{R}\right)}{Dist \left({T}_{R},T{′}_{R}\right) + Dist \left({L}_{R},L{′}_{R}\right)} ,$ and ${W}_{T} = \frac{Dist \left({T}_{R},T{′}_{R}\right)}{Dist \left({T}_{R},T{′}_{R}\right) + Dist \left({L}_{R},L{′}_{R}\right)} .$ The above calculations calculate the weighted distribution of the difference in distances between the templates and the similar sized regions. For example, the distance Dist(L_{R}, L'_{R}) is the difference between left template L_{R} 210-2 and region L'_{R} 902-1, and the distance Dist(T_{R}, T'_{R}) is the difference between top template T_{R} 210-1 and region T'_{R} 902-2. The weighted distribution calculates the contribution of each respective distance compared the total distance of distance Dist(L_{R}, L'_{R}) and distance Dist(T_{R}, T'_{R}).

At 812, decoder motion prediction block 110 uses the weights in the matching template search process to decode current block C 200. For example, decoder motion prediction block 110 can use a similar process as described above in option #1. In this case, decoder motion prediction block 110 determines the rough motion vector from the encoded bitstream for current block C 200, identifies a rough reference block 206 in reference frame 204, and searches for a final motion vector to a final reference block in search region 702 that may be a better match then the identified rough reference block using the weights. Decoder motion prediction block 110 may perform the above search for multiple reference blocks in search region 702 and select a final reference block that includes a left template and a top template that is most similar to the left template and top template of current block C 200.

### Third Option #3 of Determining the Weighting Factors

In a third option #3, transcoder motion prediction block 108 or decoder motion prediction block 110 may select a single template to use. This process may use a "winner-take-all" strategy instead of the methodology of applying the weighting factors described above. The winner-take all strategy selects one of the templates to use instead of weighting the templates. In some embodiments, this may mean using a 100% weight for one template region and a 0% weight for the other template regions. Given the distance for left template Dist_{L} and distance for top template Dist_{T}, transcoder motion prediction block 108 or decoder motion prediction block 110 determines if Dist_{L}/ Dist_{T} < thresholdLow, which determines whether the distance of pixels of the left template from the rough reference block divided by the distance of pixels of the top template from the rough reference block is less than a threshold. As the distance of the top template becomes greater than the distance of the left template, the value of Dist_{L} / Dist_{T} becomes smaller. The threshold thresholdLow is set at a value that indicates the distance of the top template has become greater than the distance of the left template by an amount that the left template is only used.

If the above threshold thresholdLow is not met, the decoder determines if Dist_{L} / Dist_{T} > thresholdHigh, which determines whether the distance of pixels of the left template from the rough reference block divided by the distance of pixels of the top template from the rough reference block is greater than a threshold. As the distance of the left template becomes greater compared to the distance of the top template, the value of Dist_{L} / Dist_{T} becomes greater. The threshold thresholdHigh is set at a value that indicates the distance of the left template has become less than the distance of the top template by an amount that the top template is only used.

The third option #3 only uses one template to perform the search for a final reference block that may be most similar to the current block C 200. This option may be used when one template is not very similar to the final reference block or the current block.

### System

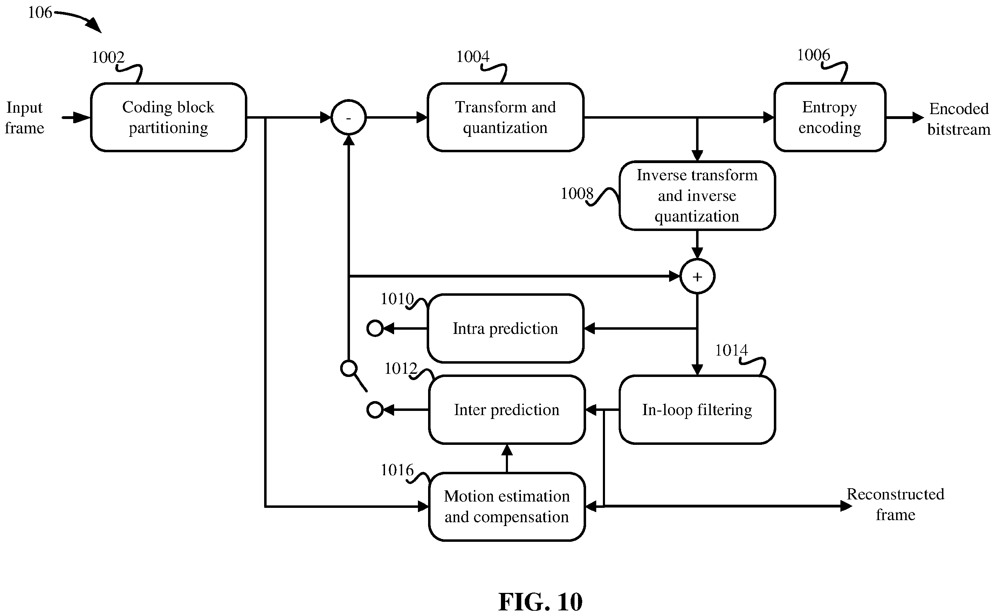

FIG. 10 depicts an example of a transcoding system according to some embodiments. A video codec framework includes a set of fundamental components: block partitioning, inter and intra prediction, transform and quantization, and entropy coding.

Transcoder 106 receives a frame of a video, which is firstly split into non-overlapping coding blocks for further processing. To cope with different video content characteristics, complex regions will be covered by partitions with smaller sizes, while simple regions will be covered by larger partitions. Multiple block patterns and shapes are may be both used together, for example quad-tree pattern, triple-tree pattern and binary-tree pattern can be all used together, while square blocks and rectangular blocks can also be used together.

Prediction is used to remove the redundancy of a video signal. By subtracting the predicted pixel values from the pixels being processed, the amplitude of a residual signal can be significantly reduced, thus the resulting bitstream size can be reduced. An intra prediction block 1010, which is using reference pixels in the current frame, aims to reduce the spatial redundancy within the frame. An inter prediction block 1012, which is using reference pixels from neighboring frames, attempts to remove the temporal redundancy between frames. a motion estimation and compensation block 1016 may be a sub-module of inter prediction at the transcoder side, which captures the motion trace of objects among adjacent frames and generates reference pixels for inter prediction.

A transform and quantization block 1004 uses the residual pixels after intra or inter prediction. Transform and quantization block 1004 performs a transform operation that represents the residual signal in a frequency domain. Considering the human visual system is more sensitive on low frequency components of video signal than the high frequency components, quantization is designed to further compress the residual signal by reducing the precision on high frequency signals.

To avoid the out-of-sync issue between transcoder 106 and decoder 112, transcoder 106 contains decoding modules to make sure both transcoder 106 and decoder 112 are using identical mathematical processes. Thus, an inverse transform and inverse quantization block 1008 is similar to the same block on the decoder side. Inverse transform and inverse quantization block 1008 reconstructs pixels using the intra and inter prediction.

An in-loop filter 1014 removes any visual artifacts that are introduced by the above-mentioned processes. Various filtering methods are applied on the reconstructed frame in a cascaded way to reduce different artifacts, including but not limited to the blocking artifacts, mosquito artifacts, color banding effects, etc.

An entropy encoding block 1006 may further compress the bitstream using a model-based method. Transcoder 106 transmits the resulting encoded bitstream to decoder 112 over a network or other types of medium.

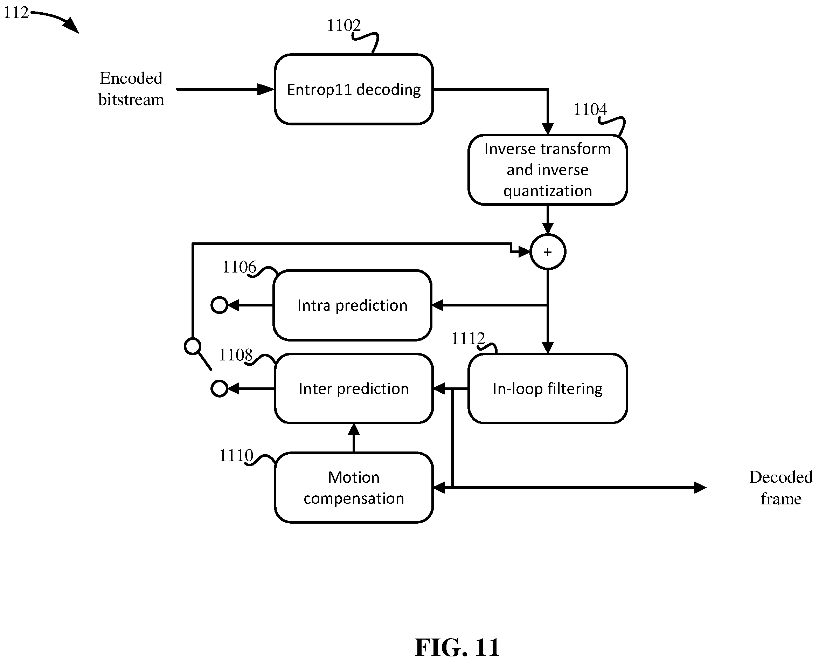

FIG. 11 depicts an example of a decoding system according to some embodiments. Decoder 112 receives the encoded bitstream and inputs it into an entropy decoding block 1102 to recover the information needed for decoding process. As above-mentioned, a decoded frame can be decoded by using an inverse transform and inverse quantization block 1104, an intra prediction block 1106 or inter prediction block 1108, motion compensation block 1110, and in-loop filtering block 1112 in the same way to build a decoded frame.

Some embodiments may be implemented in a non-transitory computer-readable storage medium for use by or in connection with the instruction execution system, apparatus, system, or machine. The computer-readable storage medium contains instructions for controlling a computer system to perform a method described by some embodiments. The computer system may include one or more computing devices. The instructions, when executed by one or more computer processors, may be configured or operable to perform that which is described in some embodiments.

As used in the description herein and throughout the claims that follow, "a", "an", and "the" includes plural references unless the context clearly dictates otherwise. Also, as used in the description herein and throughout the claims that follow, the meaning of "in" includes "in" and "on" unless the context clearly dictates otherwise.

The above description illustrates various embodiments along with examples of how aspects of some embodiments may be implemented.

## Claims

1. A method (800) comprising:
receiving (802), by a decoder (112), an encoded bitstream for a first block (200) of a current frame (201);
determining (804), by the decoder (112), a second block (206) of a reference frame (204) that was signaled in the encoded bitstream from a received motion vector (208) as a reference for the first block (200);
selecting (806, 808), by the decoder (112), a first template (210-1) of pixels that is outside of the second block (206) and a second template (210-2) of pixels that is outside of the second block (206), wherein the first template (210-1) of pixels neighbor a row of the second block (206) and the second template (210-2) of pixels neighbor a column of the second block (206);
selecting, by the decoder (112), a first region (902-1) of pixels that are inside the second block (206) and a second region (902-2) of pixels that are inside the second block (206), wherein the first region (902-1) of pixels corresponds in size to the second template (210-2) of pixels and the second region (902-2) of pixels corresponds in size to the first template (210-1) of pixels;
calculating (810), by the decoder (112), a first weight (WL) based on calculating a measurement of similarity between pixel values of the second template (210-2) of pixels and the first region (902-1) of pixels;
calculating (810), by the decoder (112), a second weight (WT) based on calculating a measurement of similarity between pixel values of the first template (210-1) of pixels and the second region (902-2) of pixels,
searching, by the decoder (112), for a third block in the reference frame (204) from within a search region (702) with respect to the second block (206) in the reference frame (204), wherein searching comprises:
determining a first template (210-1) of pixels for the second block (206);
determining a second template (210-2) of pixels for the second block (206);
applying the first weight (WL) to the first template (210-1) of pixels for the second block (206) to generate a weighted first template of pixels for the second block (206);
applying the second weight to the second template (210-2) of pixels for the second block (206) to generate a weighted second template of pixels for the second block (206);
determining a first template of pixels for the third block and a second template of pixels for the third block, wherein the first template of pixels neighbors a row of the third block and the second template of pixels neighbors a column of the third block;
applying the first weight (WL) to the first template (210-1) of pixels for the first block (200) to generate a weighted first template of pixels for the first block (200) and applying the first weight (WL) to the first template of pixels for the third block to generate a weighted first template of pixels for the third block;
applying the second weight (WT) to the second template (210-2) of pixels for the first block (200) to generate a weighted second template of pixels for the first block (200) and applying the second weight to the second template of pixels for the third block to generate a weighted second template of pixels for the third block; and
comparing the first weighted template of pixels for the first block (200) to the first weighted template of pixels for the third block and comparing the second weighted template of pixels for the first block (200) to the second weighted template of pixels for the third block to determine a measurement of similarity between pixel values based on a first difference between pixel values between the first weighted template of pixels for the third block to the first weighted template of pixels for the first block (200) and the second weighted template of pixels for the third block to the second weighted template of pixels for the first block (200) and a second difference between pixel values between the first weighted template of pixels for the second block (206) to the first weighted template of pixels for the first block (200) and the second weighted template of pixels for the second block (206) to the second weighted template of pixels for the first block (200), wherein a smaller difference between pixel values means more similarity, wherein the measurement of similarity is used to determine whether the third block or the second block (206) is more similar to the first block (200).

2. The method of claim 1, wherein searching for the third block to use as the reference for the first block (200) comprises:
applying the first weight (WL) to a first template (210-1) of pixels for a plurality of third blocks to generate a plurality of weighted first template of pixels for the plurality of third blocks;
applying the second weight to a second template (210-2) of pixels for the plurality of third blocks to generate a plurality of weighted second template of pixels for the plurality of third blocks;
comparing the plurality of first weighted template of pixels for the plurality of third blocks to the first weighted template (202-2) of pixels for the first block (200) and comparing the plurality of second weighted template of pixels for the plurality of third blocks to the second weighted template (202-1) of pixels for the first block (200) to determine a plurality of measurements of similarity between pixel values; and
selecting one of the plurality of third blocks based on the plurality of measurements of similarity between pixel values.

3. The method of claim 1, wherein:
the first template (210-1) of pixels for the first block (200) includes pixels to a left of the first block (200),
the second template (210-2) of pixels for the first block (200) includes pixels to a top of the first block (200),
the first template of pixels for the third block includes pixels to the left of the third block, and
the second template of pixels for the third block includes pixels to the top of the third block.

4. A method (400) comprising:
selecting, by a computing device, a first template (210-1) of pixels that is outside of a first block (200) and a second template (210-2) of pixels that is outside of the first block (200), wherein the first template (210-1) of pixels neighbor a row of the first block (200) and the second template of pixels neighbor a column of the first block (200);
selecting (404), by the computing device, a first region (502-1) of pixels that are inside the first block (200) and a second region (502-2) of pixels that are inside the first block (200), wherein the first region (502-1) of pixels corresponds in size to the first template (210-1) of pixels and the second region (502-2) of pixels corresponds in size to the second template (210-2) of pixels;
calculating (410), by the computing device, a first weight based on calculating a measurement of similarity between pixel values of the first template (210-1) of pixels and the first region (502-1) of pixels; and
calculating (410), by the computing device, a second weight based on calculating a measurement of similarity between pixel values of the second template of pixels and the second region (502-2) of pixels, wherein the first weight and the second weight are used in a motion prediction search for a second block (206) in a different frame than the first block (200),
applying, by the computing device, the first weight to a third template of pixels that is outside of the second block to generate a weighted third template of pixels and the second weight to a fourth template of pixels that is outside of the second block to generate a weighted fourth template of pixels;
using, by the computing device, the weighted third template of pixels and the weighted fourth template of pixels in a motion prediction search to determine a reference block for the first block (200) being coded in a different frame than the reference block; and
outputting an encoded bitstream for the coded block.

5. A non-transitory computer-readable storage medium containing instructions, that when executed, control a computer system to perform the method according to any of the previous claims.

## Patentansprüche

1. Ein Verfahren (800), umfassend:
Empfangen (802), durch einen Decoder (112), eines codierten Bitstroms für einen ersten Block (200) eines aktuellen Einzelbilds (201);
Ermitteln (804), durch den Decoder (112), eines zweiten Blocks (206) eines Referenz-Einzelbilds (204), der im codierten Bitstrom aus einem empfangenen Bewegungsvektor (208) als Referenz für den ersten Block (200) signalisiert wurde;
Auswählen (806, 808), durch den Decoder (112), eines ersten Pixel-Templates (210-1), das außerhalb des zweiten Blocks (206) liegt, und eines zweiten Pixel-Templates (210-2), das außerhalb des zweiten Blocks (206) liegt, wobei das erste Pixel-Template (210-1) an eine Zeile des zweiten Blocks (206) angrenzt, und das zweite Pixel-Template (210-2) an eine Spalte des zweiten Blocks (206) angrenzt;
Auswählen, durch den Decoder (112), eines ersten Bereichs (902-1) von Pixeln, der innerhalb des zweiten Blocks (206) liegt und eines zweiten Bereichs (902-2) von Pixeln, der innerhalb des zweiten Blocks (206) liegt, wobei der erste Bereich (902-1) von Pixeln in seiner Größe dem zweiten Pixel-Template (210-2) entspricht, und der zweite Bereich (902-2) von Pixeln in seiner Größe dem ersten Pixel-Template (210-1) entspricht;
Berechnen (810), durch den Decoder (112), eines ersten Gewichts (WL) auf der Grundlage der Berechnung eines Ähnlichkeitsmaßes zwischen den Pixelwerten des zweiten Pixel-Templates (210-2) und dem ersten Bereich (902-1) von Pixeln;
Berechnen (810), durch den Decoder (112), eines zweiten Gewichts (WT) auf der Grundlage der Berechnung eines Ähnlichkeitsmaßes zwischen den Pixelwerten des ersten Pixel-Templates (210-1) und dem zweiten Bereich (902-2) von Pixeln;
Suchen, durch den Decoder (112), nach einem dritten Block im Referenz-Einzelbild (204) innerhalb eines Suchbereichs (702) in Bezug auf den zweiten Block (206) im Referenz-Einzelbild (204), wobei das Suchen Folgendes umfasst:
Bestimmen eines ersten Pixel-Templates (210-1) für den zweiten Block (206);
Bestimmen eines zweiten Pixel-Templates (210-2) für den zweiten Block (206);
Anwenden des ersten Gewichts (WL) auf das erste Pixel-Template (210-1) für den zweiten Block (206), um ein gewichtetes erstes Pixel-Template für den zweiten Block (206) zu erzeugen;
Anwenden des zweiten Gewichts auf das zweite Pixel-Template (210-2) für den zweiten Block (206), um ein gewichtetes zweites Pixel-Template für den zweiten Block (206) zu erzeugen;
Ermitteln eines ersten Pixel-Templates für den dritten Block und eines zweiten Pixel-Templates für den dritten Block, wobei das erste Pixel-Template an eine Zeile des dritten Blocks angrenzt, und das zweite Pixel-Template an eine Spalte des dritten Blocks angrenzt;
Anwenden des ersten Gewichts (WL) auf das erste Pixel-Template (210-1) für den ersten Block (200), um ein gewichtetes erstes Pixel-Template für den ersten Block (200) zu erzeugen, und Anwenden des ersten Gewichts (WL) auf das erste Pixel-Template für den dritten Block, um ein gewichtetes erstes Pixel-Template für den dritten Block zu erzeugen;
Anwenden des zweiten Gewichts (WT) auf das zweite Pixel-Template (210-2) für den ersten Block (200), um ein gewichtetes zweites Pixel-Template für den ersten Block (200) zu erzeugen, und Anwenden des zweiten Gewichts auf das zweite Pixel-Template für den dritten Block, um ein gewichtetes zweites Pixel-Template für den dritten Block zu erzeugen; und
Vergleichen des ersten gewichteten Pixel-Templates für den ersten Block (200) mit dem ersten gewichteten Pixel-Template für den dritten Block und Vergleichen des zweiten gewichteten Pixel-Templates für den ersten Block (200) mit dem zweiten gewichteten Pixel-Template für den dritten Block, um ein Ähnlichkeitsmaß zwischen Pixelwerten zu bestimmen, basierend auf einer ersten Differenz zwischen Pixelwerten zwischen dem ersten gewichteten Pixel-Template für den dritten Block und dem ersten gewichteten Pixel-Template für den ersten Block (200) und zwischen dem zweiten gewichteten Pixel-Template für den dritten Block und dem zweiten gewichteten Pixel-Template für den ersten Block (200), sowie einer zweiten Differenz zwischen Pixelwerten zwischen dem ersten gewichteten Pixel-Template für den zweiten Block (206) und dem ersten gewichteten Pixel-Template für den ersten Block (200) und zwischen dem zweiten gewichteten Pixel-Template für den zweiten Block (206) und dem zweiten gewichteten Pixel-Template für den ersten Block (200), wobei eine kleinere Differenz zwischen Pixelwerten eine größere Ähnlichkeit bedeutet, wobei das Ähnlichkeitsmaß verwendet wird, um zu bestimmen, ob der dritte Block oder der zweite Block (206) dem ersten Block (200) ähnlicher ist.

2. Das Verfahren nach Anspruch 1, wobei das Suchen nach dem dritten Block, zur Verwendung als Referenz für den ersten Block (200) Folgendes umfasst:
Anwenden des ersten Gewichts (WL) auf ein erstes Pixel-Template (210-1) für eine Vielzahl von dritten Blöcken, um eine Vielzahl von gewichteten ersten Pixel-Templates für die Vielzahl von dritten Blöcken zu erzeugen;
Anwenden des zweiten Gewichts auf ein zweites Pixel-Template (210-2) für die Vielzahl von dritten Blöcken, um eine Vielzahl von gewichteten zweiten Pixel-Templates für die Vielzahl von dritten Blöcken zu erzeugen;
Vergleichen der Vielzahl von ersten gewichteten Pixel-Templates für die Vielzahl von dritten Blöcken mit dem ersten gewichteten Pixel-Template (202-2) für den ersten Block (200), und Vergleichen der Vielzahl von zweiten gewichteten Pixel-Templates für die Vielzahl von dritten Blöcken mit dem zweiten gewichteten Pixel-Template (202-1) für den ersten Block (200), um eine Vielzahl von Ähnlichkeitsmaßen zwischen Pixelwerten zu ermitteln; und
Auswählen eines der Vielzahl von dritten Blöcken auf der Grundlage der Vielzahl von Ähnlichkeitsmaßen zwischen Pixelwerten.

3. Das Verfahren nach Anspruch 1, wobei:
das erste Pixel-Template (210-1) für den ersten Block (200) Pixel links vom ersten Block (200) beinhaltet,
das zweite Pixel-Template (210-2) für den ersten Block (200) Pixel oberhalb des ersten Blocks (200) beinhaltet,
das erste Pixel-Template für den dritten Block Pixel links vom dritten Block beinhaltet, und
das zweite Pixel-Template für den dritten Block Pixel oberhalb des dritten Blocks beinhaltet.

4. Ein Verfahren (400), umfassend:
Auswählen, durch eine Rechenvorrichtung, eines ersten Pixel-Templates (210-1), das außerhalb eines ersten Blocks (200) liegt, und eines zweiten Pixel-Templates (210-2), das außerhalb des ersten Blocks (200) liegt, wobei das erste Pixel-Template (210-1) an eine Zeile des ersten Blocks (200) angrenzt, und das zweite Pixel-Template an eine Spalte des ersten Blocks (200) angrenzt;
Auswählen (404), durch die Rechenvorrichtung, eines ersten Bereichs (502-1) von Pixeln, die innerhalb des ersten Blocks (200) liegen, und eines zweiten Bereichs (502-2) von Pixeln, die innerhalb des ersten Blocks (200) liegen, wobei der erste Bereich (502-1) von Pixeln in seiner Größe dem ersten Pixel-Template (210-1) entspricht, und der zweite Bereich (502-2) von Pixeln in seiner Größe dem zweiten Pixel-Template (210-2) entspricht;
Berechnen (410), durch die Rechenvorrichtung, eines ersten Gewichts auf der Grundlage der Berechnung eines Ähnlichkeitsmaßes zwischen Pixelwerten des ersten Pixel-Templates (210-1) und des ersten Bereichs (502-1) von Pixeln; und
Berechnen (410), durch die Rechenvorrichtung, eines zweiten Gewichts auf der Grundlage der Berechnung eines Ähnlichkeitsmaßes zwischen Pixelwerten des zweiten Pixel-Templates und des zweiten Bereichs (502-2), wobei das erste Gewicht und das zweite Gewicht bei einer Bewegungsvorhersagesuche nach einem zweiten Block (206) in einem anderen Einzelbild als dem ersten Block (200) verwendet werden,
Anwenden, durch die Rechenvorrichtung, des ersten Gewichts auf ein drittes Pixel-Template, das außerhalb des zweiten Blocks liegt, um ein gewichtetes drittes Pixel-Template zu erzeugen, und des zweiten Gewichts auf ein viertes Pixel-Template, das außerhalb des zweiten Blocks liegt, um ein gewichtetes viertes Pixel-Template zu erzeugen;
Verwenden, durch die Rechenvorrichtung, des gewichteten dritten Pixel-Templates und des gewichteten vierten Pixel-Templates bei einer Bewegungsvorhersagesuche, um einen Referenzblock für den ersten Block (200), der in einem anderen Einzelbild als der Referenzblock codiert wird, zu bestimmen; und
Ausgeben eines codierten Bitstroms für den codierten Block.

5. Ein nicht-flüchtiges, computerlesbares Speichermedium, das Anweisungen enthält, die bei ihrer Ausführung ein Computersystem dazu veranlassen, das Verfahren nach einem beliebigen der vorstehenden Ansprüche auszuführen.

## Revendications

1. Un procédé (800) comprenant :
la réception (802), par un décodeur (112), d'un flux binaire codé correspondant à un premier bloc (200) d'une trame courante (201) ;
la détermination (804), par le décodeur (112), d'un deuxième bloc (206) d'une trame de référence (204) qui a été signalé dans le flux binaire codé à partir d'un vecteur de mouvement reçu (208) en tant que référence pour le premier bloc (200) ;
la sélection (806, 808), par le décodeur (112), d'un premier gabarit (210-1) de pixels qui est à l'extérieur du deuxième bloc (206) et d'un deuxième gabarit (210-2) de pixels qui est à l'extérieur du deuxième bloc (206), sachant que le premier gabarit (210-1) de pixels est adjacent à une rangée du deuxième bloc (206) et que le deuxième gabarit (210-2) de pixels est adjacent à une colonne du deuxième bloc (206) ;
la sélection, par le décodeur (112), d'une première région (902-1) de pixels qui est à l'intérieur du deuxième bloc (206) et d'une deuxième région (902-2) de pixels qui est à l'intérieur du deuxième bloc (206), sachant que la première région (902-1) de pixels a une taille correspondant à celle du deuxième gabarit (210-2) de pixels et que la deuxième région (902-2) de pixels a une taille correspondant à celle du premier gabarit (210-1) de pixels ;
le calcul (810), par le décodeur (112), d'un premier poids (WL) basé sur le calcul d'une mesure de similarité entre des valeurs de pixels du deuxième gabarit (210-2) de pixels et de la première région (902-1) de pixels ;
le calcul (810), par le décodeur (112), d'un deuxième poids (WT) basé sur le calcul d'une mesure de similarité entre des valeurs de pixels du premier gabarit (210-1) de pixels et de la deuxième région (902-2) de pixels,
la recherche, par le décodeur (112), d'un troisième bloc dans la trame de référence (204) à l'intérieur d'une région de recherche (702) par rapport au deuxième bloc (206) dans la trame de référence (204), la recherche comprenant :
la détermination d'un premier gabarit (210-1) de pixels pour le deuxième bloc (206) ;
la détermination d'un deuxième gabarit (210-2) de pixels pour le deuxième bloc (206) ;
l'application du premier poids (WL) au premier gabarit (210-1) de pixels pour le deuxième bloc (206) afin de générer un premier gabarit de pixels pondéré pour le deuxième bloc (206) ;
l'application du deuxième poids au deuxième gabarit (210-2) de pixels pour le deuxième bloc (206) afin de générer un deuxième gabarit de pixels pondéré pour le deuxième bloc (206) ;
la détermination d'un premier gabarit de pixels pour le troisième bloc et d'un deuxième gabarit de pixels pour le troisième bloc, sachant que le premier gabarit de pixels est adjacent à une rangée du troisième bloc et que le deuxième gabarit de pixels est adjacent à une colonne du troisième bloc ;
l'application du premier poids (WL) au premier gabarit (210-1) de pixels pour le premier bloc (200) afin de générer un premier gabarit de pixels pondéré pour le premier bloc (200), et l'application du premier poids (WL) au premier gabarit de pixels pour le troisième bloc afin de générer un premier gabarit de pixels pondéré pour le troisième bloc ;
l'application du deuxième poids (WT) au deuxième gabarit (210-2) de pixels pour le premier bloc (200) afin de générer un deuxième gabarit de pixels pondéré pour le premier bloc (200), et l'application du deuxième poids au deuxième gabarit de pixels du troisième bloc afin de générer un deuxième gabarit de pixels pondéré pour le troisième bloc ; et
la comparaison du premier gabarit de pixels pondéré pour le premier bloc (200) avec le premier gabarit de pixels pondéré pour le troisième bloc, et la comparaison du deuxième gabarit de pixels pondéré pour le premier bloc (200) avec le deuxième gabarit de pixels pondéré pour le troisième bloc, afin de déterminer une mesure de similarité entre des valeurs de pixels, sur la base d'une première différence entre des valeurs de pixels entre le premier gabarit de pixels pondéré pour le troisième bloc et le premier gabarit de pixels pondéré pour le premier bloc (200) et entre le deuxième gabarit de pixels pondéré pour le troisième bloc et le deuxième gabarit de pixels pondéré pour le premier bloc (200), et d'une deuxième différence entre des valeurs de pixels, entre le premier gabarit de pixels pondéré pour le deuxième bloc (206) et le premier gabarit de pixels pondéré pour le premier bloc (200) et entre le deuxième gabarit de pixels pondéré pour le deuxième bloc (206) et le deuxième gabarit de pixels pondéré pour le premier bloc (200), sachant qu'une différence plus petite entre des valeurs de pixels indique une similarité plus grande, sachant que la mesure de similarité est utilisée pour déterminer si le troisième bloc ou le deuxième bloc (206) est plus similaire au premier bloc (200).

2. Le procédé d'après la revendication 1, sachant que la recherche du troisième bloc à utiliser comme référence pour le premier bloc (200) comprend :
l'application du premier poids (WL) à un premier gabarit (210-1) de pixels pour une pluralité de troisièmes blocs afin de générer une pluralité de premiers gabarits de pixels pondérés pour la pluralité de troisièmes blocs ;
l'application du deuxième poids à un deuxième gabarit (210-2) de pixels pour la pluralité de troisièmes blocs afin de générer une pluralité de deuxièmes gabarits de pixels pondérés pour la pluralité de troisièmes blocs ;
la comparaison de la pluralité de premiers gabarits de pixels pondérés pour la pluralité de troisièmes blocs au premier gabarit pondéré (202-2) de pixels pour le premier bloc (200), et la comparaison de la pluralité de deuxièmes gabarits de pixels pondérés pour la pluralité de troisièmes blocs au deuxième gabarit pondéré (202-1) de pixels pour le premier bloc (200) afin de déterminer une pluralité de mesures de similarité entre des valeurs de pixels ; et
la sélection de l'un de la pluralité de troisièmes blocs sur la base de la pluralité de mesures de similarité entre des valeurs de pixels.

3. Le procédé d'après la revendication 1, sachant que :
le premier gabarit (210-1) de pixels pour le premier bloc (200) inclut des pixels à gauche du premier bloc (200),
le deuxième gabarit (210-2) de pixels pour le premier bloc (200) inclut des pixels au-dessus du premier bloc (200),
le premier gabarit de pixels pour le troisième bloc inclut des pixels à gauche du troisième bloc, et
le deuxième gabarit de pixels pour le troisième bloc inclut des pixels au-dessus du troisième bloc.

4. Un procédé (400) comprenant :
la sélection, par un dispositif informatique, d'un premier gabarit (210-1) de pixels qui est à l'extérieur d'un premier bloc (200), et d'un deuxième gabarit (210-2) de pixels qui est à l'extérieur du premier bloc (200), sachant que le premier gabarit (210-1) de pixels est adjacent à une rangée du premier bloc (200) et que le deuxième gabarit de pixels est adjacent à une colonne du premier bloc (200) ;
la sélection (404), par le dispositif informatique, d'une première région (502-1) de pixels qui sont à l'intérieur du premier bloc (200), et d'une deuxième région (502-2) de pixels qui sont à l'intérieur du premier bloc (200), sachant que la première région (502-1) de pixels a une taille correspondant à celle du premier gabarit (210-1) de pixels, et que la deuxième région (502-2) de pixels a une taille correspondant à celle du deuxième gabarit (210-2) de pixels ;
le calcul (410), par le dispositif informatique, d'un premier poids sur la base d'un calcul d'une mesure de similarité entre des valeurs de pixels du premier gabarit (210-1) de pixels et de la première région (502-1) de pixels ; et
le calcul (410), par le dispositif informatique, d'un deuxième poids sur la base d'un calcul d'une mesure de similarité entre des valeurs de pixels du deuxième gabarit de pixels et de la deuxième région (502-2) de pixels, sachant que le premier poids et le deuxième poids sont utilisés dans une recherche de prédiction de mouvement pour un deuxième bloc (206) dans une trame différente de celle du premier bloc (200),
l'application, par le dispositif informatique, du premier poids à un troisième gabarit de pixels qui est à l'extérieur du deuxième bloc afin de générer un troisième gabarit de pixels pondéré, et du deuxième poids à un quatrième gabarit de pixels qui est à l'extérieur du deuxième bloc afin de générer un quatrième gabarit de pixels pondéré ;
l'utilisation, par le dispositif informatique, du troisième gabarit de pixels pondéré et du quatrième gabarit de pixels pondéré dans une recherche de prédiction de mouvement afin de déterminer un bloc de référence pour le premier bloc (200) en cours de codage dans une trame différente de celle du bloc de référence ; et
la sortie d'un flux binaire codé pour le bloc codé.

5. Un support de stockage non transitoire lisible par ordinateur contenant des instructions qui, lorsqu'elles sont exécutées, commandent un système informatique pour qu'il mette en œuvre le procédé d'après l'une quelconque des revendications précédentes.
